# EUROPEAN PATENT APPLICATION

(11) **EP 4 361 216 A1**
(43) Date of publication of application: **01.05.2024**
(21) Application number: 22204331.7
(22) Date of filing: 28.10.2022
(51) Int. Cl.: C08L 33/04, C08L 63/00, C08K 5/00

(54) **ACRYLIC PLASTISOL-BASED SEAM SEALER WITH LOW TEMPERATURE ELASTICITY**

(71) Applicant: Sika Technology AG, 6340 Baar (CH)
(72) Inventor: YAO, Hong, Boonton, 07005 (US)
(74) Representative: Sika Patent Attorneys

(57) **Abstract**

The invention is directed to acrylic plastisol composition comprising at least one acrylate polymer, at least one epoxy resin having on average more than one epoxide group per molecule, at least one latent hardener for epoxy resins, at least one plasticizer, characterized in that said epoxy resin is liquid at 23 °C and has a polyether backbone that is not based on bisphenol structural units.

The acrylic plastisol composition according to this invention can be used as seam sealer on metal substrates that are afterwards powder coated at temperatures up to 200 °C or higher and shows excellent low temperature flexibility and bendability at temperatures down to -25 °C or lower.

## Description

### Technical field

The invention relates to acrylic plastisol compositions suitable for sealing of metal surfaces that are afterwards powder coated. In particular, the invention relates to plastisol compositions that can be applied to a manufactured good or a structure of a mode of transport, such an automotive vehicle, wherein the composition cures at elevated temperatures and is powder coated together with the manufactured good or the structure of a mode of transport.

### Background of the invention

Various existing plastisol compositions are used for a variety of applications including surface coating for waterproofing and sealing applications. Typically, plastisol consists of PVC or PVC-alternative particles suspended in a liquid plasticizer with additional other agents to achieve desired properties. Compositions containing acrylate polymers and plasticizers are commonly used to for the sealing of structural components of manufactured articles, in particular structural components of transportation vehicles and white goods.

It is generally desired that the application of these plastisol compositions does not interfere with the processing, formation, or assembly of the manufactured article. For example, it is critical that the compositions, when positioned in a weld location, do not inhibit or interfere with the welding of the components. Furthermore, the compositions materials should provide good bonding with metal surfaces, in particular to oiled metal surfaces.

Such plastisol compositions are also used in applications, where portions of structures of manufactured articles, such as automotive vehicles, are bonded to each other by spot welding. In some applications, the structures are bonded to each other by welds which extend through the applied composition. The compositions used in these applications are also known as "welding sealer compositions" or "seam sealer compositions". In a typical welding application, the composition is applied to a portion of a structure, which is subsequently welded to form a bond with a portion of another structure. After welding, the welding seam typically needs to be sealed by a seam sealer, in order to smoothen the surface and to provide corrosion protection.

Such welded structures, being for example a manufactured good or a structure of a mode of transport, such an automotive vehicle, commonly are coated after their manufacture in order to provide a protective and esthetically pleasing surface on the object. A common form of coating is powder coating. Powder coating is a type of coating that is applied as a free-flowing, dry powder. Unlike conventional liquid paint, which is delivered via an evaporating solvent, powder coating is typically applied electrostatically and then cured under heat or with ultraviolet light. The powder may be a thermoplastic or a thermoset polymer. It is usually used to create a hard finish that is tougher than conventional paint. Powder coating is mainly used for coating of metals, such as household appliances, aluminum extrusions, drum hardware, automobiles, and bicycle frames. Most powder coatings are cured at around 180 °C to 200 °C for a minimum of 10 minutes to 15 minutes. Seam sealer compositions present on the object during the powder coating process must be able to maintain these harsh curing conditions. This has been done so far using PVC-based plastisol. However, PVC-based plastisol has limited heat stability.

Improved results have been obtained using acrylic plastisol, which has a better heat stability than PVC-based plastisol. However, acrylic plastisol shows other disadvantages. In particular at very low temperatures, i.e., down to -25°C or lower, acrylic plastisol tends to become brittle and lose its flexibility.

In order to overcome this, several known toughening additives have been used in various attempts to improve the low temperature flexibility of acrylic plastisol. However, they all have their respective disadvantages.

Elastic urethane-based toughening additives, for example, generally show limited heat stability for baking temperature at 200°C or higher, which is often present in powder coating processes.

Blocked urethane additives in acrylic plastisol are generally detrimental for adhesion to treated or non-treated metals and have poor compatibility with some polyester-based powder-coats, leading to surface cracks on the coating and making the coating surface sticky and greasy.

Unblocked, isocyanate-functional urethane additives are also generally not compatible with acrylic plastisol because almost every acrylic resin used for plastisol applications has hydroxyl or amino functionalities built-into the matrix for adhesion reasons that react with the isocyanate groups in an undesired manner.

Solid rubber or core-shell particle additives are also not ideal, as they are difficult to compound into the plastisol composition and lead to poor material properties, such as excessive thickening or decrease in shelf stability of the packaged product.

Thus, there still is the need for an acrylic plastisol composition which can be used as seam sealer on metal substrates that are afterwards powder coated, and which have an excellent low temperature flexibility and bendability at temperatures down to -25°C, preferably even lower.

### Summary of the invention

The object of the present invention is to provide an acrylic plastisol composition, which can be used as seam sealer on metal substrates that are afterwards powder coated at temperatures up to 200 °C or higher, and which show excellent low temperature flexibility and bendability at temperatures down to -25°C, in preferred embodiments down to -40 °C. Surprisingly, it was found that a composition according to claim 1 can achieve this object.

Other aspects of the present invention are presented in other independent claims. Preferred aspects of the invention are presented in the dependent claims.

### Detailed description of the invention

The subject of the present invention is an acrylic plastisol composition comprising:
a) at least one acrylate polymer **AP**;
b) at least one epoxy resin **A** having on average more than one epoxide group per molecule;
c) at least one latent hardener for epoxy resins;
d) at least one plasticizer **PL**;
characterized in that
said epoxy resin **A** is liquid at 23 °C and has a polyether backbone that is not based on bisphenol structural units.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "plastisol" preferably refers to dispersions of plastics, in particular polymers produced by emulsion polymerization or microemulsion polymerization, in high-boiling organic compounds, which act as plasticizers for the polymer at higher temperatures. When the plastisol is heated, the plasticizers diffuse into the dispersed plastic particles, where they are stored between the macromolecules, thereby causing the plastics to plasticize. When cooling, the plastisols gel into flexible, dimensionally stable system. More preferably, the term refers to the definition described in the Römpp Chemie Lexikon, online version, Georg Thieme Verlag, retrieved on March 19, 2020.

The term "polymer" refers to a collective of chemically uniform macromolecules produced by a polyreaction (polymerization, polyaddition, polycondensation) where the macromolecules differ with respect to their degree of polymerization, molecular weight, and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The "median particle size dso" refers to the particle size of a solid particle ensemble when the cumulative percentage reaches 50%. For example, for a powder sample with a median particle size dso = 5µm, it means 50% of particles are larger than 5µm and 50% particles are smaller than 5µm. The median particle size dso is preferably determined by laser diffraction analysis based on ISO 13320:2009, for example measured on a CILAS 920 particle size analyzer (Cilas) or on a Malvern Mastersizer 3000 (Malvern).

The terms "shelf-life stability", "shelf stability" and "storage stability" refer to the ability of a composition to be stored at room temperature in a suitable container under exclusion of moisture for a certain time interval, in particular several months, without undergoing significant changes in application or end-use properties.

The term "molecular weight" refers to the molar mass (g/mol) of a molecule or a moiety of a molecule. The term "average molecular weight" refers to the number average molecular weight (Mn) of an oligomeric or polymeric mixture of molecules or moieties of molecules. It is commonly determined by means of gel permeation chromatography (GPC) against polystyrene as the standard, particularly with tetrahydrofuran as the mobile phase and a refractive index detector.

The term "weight-%" or "wt.-%" refers to the mass fraction of a constituent of a composition based on the entire composition, unless stated otherwise. The terms "weight" and "mass" are used synonymously in this document.

The term "room temperature" refers to a temperature of 23°C.

All industry standards and norms mentioned in this document refer to the versions valid at the time of filing the first application, if not specified.

The composition preferably contains 5 - 40 wt.-%, 10 - 40 wt.-%, 12.5 - 40 wt.-%, more preferably 15 - 35 wt.-%, even more preferably 17.5 - 32.5 wt.-%, most preferably 20 - 30 wt.-%, based on the total weight of the composition, of at least one acrylate polymer **AP.**

Preferably, the acrylate polymer **AP** is selected from the list consisting of polymers of methyl acrylate, ethyl acrylate methyl methacrylate, propyl acrylate, methyl methacrylate, ethyl methacrylate, propyl methacrylate, butyl methacrylate, and any copolymers thereof.

The acrylate polymers **AP** can be available from commercial sources such as Degalan^{®} BM 310 (homopolymer from Evonik), Degalan^{®} 4944F (homopolymer from Evonik), Kane Ace^{®} UC521 (manufactured by Kaneka), Kane Ace^{®} UC506 (Kaneka) and Kane Ace^{®} UC508 (Kaneka), and Dianal^{®} LP-3106 and Dianal^{®} LP-3121 (both manufactured by Mitsubishi).

Preferably, more than 40%, more than 50%, more than 60%, more than 70%, more than 80%, or more than 90% of the acrylate polymer **AP** is methacrylate polymer or a copolymer containing methacrylate.

Preferably, the glass transition temperature (Tg) of the acrylate polymer **AP** is from 60°C to 120°C, from 70°C to 100°C, more preferably from 75° C to 80°C. The acrylate polymer **AP** can take a variety of forms as delivered from the manufacturer: bead polymers, pellets, granules, powders, spray dried emulsion polymers, etc. Before use, the median particle size dso of the acrylate polymer **AP** can range from 1 to 100 µm, preferably from 10 to 80 µm, from 20 to 60 µm, most preferably from 40 to 60 µm.

Preferably, the acrylate polymer **AP** has the following attributes: (i) bulk density of about 350 to about 450 grams per liter; (ii) glass transition temperature from 70°C. to 80°C.; and (iii) median particle size dso of 40 to 60 microns.

The composition comprises at least one epoxy resin **A** having on average more than one epoxide group per molecule. Epoxy resin **A** is liquid at 23 °C and has a polyether backbone that is not based on bisphenol structural units. The epoxide group is preferably in the form of a glycidyl ether group.

Preferably, said epoxy resin **A** has an epoxy equivalent weight of more than 400 and/or an average epoxy functionality of between 1.5 and 2.5. More preferably, said epoxy resin **A** has an epoxy equivalent weight of more than 400 and an average epoxy functionality of between 1.5 and 2.5.

The amount of epoxy resin **A** within the composition is in particular 1 - 25 wt.-%, preferably 2 - 20 wt.-%, in particular 3 - 15 wt.-%, more preferably 5 - 12 wt.-%, based on the total weight of the composition.

The epoxy resin **A** is a liquid epoxy resin at 23 °C and under standard pressure.

Preferred epoxy resins **A** have the formula (I).

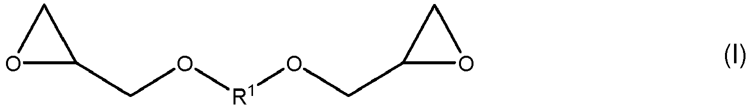

In this formula, the substituent R¹ is a divalent polyether radical that optionally comprises hydroxyl groups.

Preferably, R¹ is an optionally glycerol-started polyether comprising polyethylene glycol and/or polypropylene glycol and/or polybutylene glycol repeating units.

Suitable such epoxy resins **A** are commercially available, for example, under the tradename jER^{™} YX7400N from Mitsubishi Chemical Group.

The epoxy resin **A** preferably exhibits a viscosity, measured at 25 °C according to ASTM D445-21, of less than 5 Pa·s, preferably less than 2.5 Pa·s more preferably less than 1 Pa·s, most preferably less than 0.5 Pa·s.

The composition according to the present invention preferably does not contain any other epoxy resins apart from said epoxy resin **A.** In particular, the composition also does not contain PVC.

The composition further comprises at least one latent hardener for epoxy resins. Latent hardeners are substantially inert at room temperature and are activated by elevated temperature, typically at temperatures of 70°C or more, thereby initiating the curing reaction of the epoxy resin. The customary latent hardeners for epoxy resins can be used. Preference is given to a latent epoxy resin hardener containing nitrogen.

The latent hardener is preferably selected from the group consisting of dicyandiamide, guanamines, guanidines, aminoguanidines and derivatives thereof, substituted ureas, imidazoles and amine complexes, preferably dicyandiamide.

The amount of the latent hardener is preferably 0.1 - 1.5 wt.-%, preferably 0.15 - 1.0 wt.-%, most preferably 0.2 - 0.5 wt.-%, based on the total weight of the composition. Preferably, said at least one latent hardener is dicyandiamide.

The weight ratio of the total amount of the at least one epoxy resin **A** to the total amount of the latent hardener is preferably 40:1 to 10:1, preferably 35:1 to 15:1, more preferably 30:1 to 20:1.

Further, the composition further comprises at least one plasticizer **PL.**

The at least one plasticizer **PL** is preferably selected from the list consisting of:
- dibasic acid esters, preferably dioctyl adipate (DOA), a dioctyl azelate (DOZ), and a dioctyl sebacate (DOS);
- phosphoric acid esters, preferably tricresyl phosphate (TCP), a trioctyl phosphate (TOF), a trixylenyl phosphate (TXP), a monooctyl diphenyl phosphate, and a monobutyl-dixylenyl phosphate (B-Z-X);
- benzoic acid esters;
- other esters, preferably tributyl citrate ester, a trioctyl-acetyl citric acid ester, a trimellitic acid ester, a citric acid ester, a sebacic acid ester, an azelaic acid ester, a tri- or tetraethylene glycol ester of maleate C6-C10 fatty acid, an alkyl sulfonic acid ester, and a methyl acetyl ricinoleate;
- saturated fatty acid glycerides;
- epoxidized vegetable oils;
- phthalates, preferably diisononyl phthalate (DINP) or dioctyl phthalate (DOP).

Most preferably, the at least one plasticizer **PL** comprises an aliphatic polyester that is liquid at 23 °C. Among those preferred are polymeric or oligomeric such polyesters, such as the products available under the trade name Palamoll^{®} by BASF, in particular Palamoll^{®} 652, or trimellitic acid esters, such as Palatinol^{®} TOTM available from BASF.

Aromatic esters, such as phthalates, are less preferred as plasticizer **PL,** albeit fully suitable. However, at very high temperatures, i.e., above 200 °C, some of them have the tendency to smoke out, which is far less the case with aliphatic polyesters.

The composition preferably comprises 5 - 50 wt.-%, 10 - 40 wt.-%, preferably 12.5 - 40 wt.-%, more preferably 15 - 35 wt.-%, most preferably 20 - 30 wt.-%, based on the total weight of the composition, of the at least one plasticizer **PL.**

The weight ratio between the total weight of the at least one plasticizers **PL** and the total weight of the at least one acrylate polymer **AP** preferably ranges from 1:10 to 20:10. More preferred ranges of the weight ratio include from 2:10 to 15:10, from 2:10 to 15:10, from 5:10 to 15:10; from 5:10 to 10:10, from 6:10 to 10:10, and from 8:10 to 10:10.

It is also advantageous if the composition contains less than 10% by weight, less than less than 5% by weight, less than 2% by weight, less than 1% by weight, less than 0.5% by weight, in particular less than 0.1% by weight, most preferably less than 0.01% by weight, of PVC, or no PVC at all. This is advantageous because the high temperatures required to cure the composition cause the PVC to release toxic hydrogen chloride gas which posed an occupational hazard to those working with the composition.

The composition furthermore preferably contains at least one additive selected from curing accelerators, tougheners, moisture scavengers, fillers, pigments, stabilizers, process oils, and thixotropy agents. These additives may be comprised in the composition in any combination.

Preferably, the composition further comprises at least one process oil. Preferably, the at least one process oil, if used, is present in the composition in an amount of 1 - 10 wt.-%, more preferably 2 - 8 wt.-%, even more preferably 3 - 6 wt.-%, based on the total weight of the composition.

Suitable process oils include mineral oils and synthetic oils. The term "mineral oil" refers in the present disclosure hydrocarbon liquids of lubricating viscosity (i.e., a kinematic viscosity at 100°C of 10⁻⁶ m²/s or more) derived from petroleum crude oil and subjected to one or more refining and/or hydroprocessing steps, such as fractionation, hydrocracking, dewaxing, isomerization, and hydrofinishing, to purify and chemically modify the components to achieve a final set of properties. In particular, the term "mineral" refers in the present disclosure to refined mineral oils, which can be also characterized as Group I-III base oils according to the classification of the American Petroleum Institute (API).

Preferred mineral oils to be used as the at least one process oil include paraffinic, naphthenic, and aromatic mineral oils. Particularly suitable mineral oils include paraffinic and naphthenic oils, preferably containing relatively low amounts of aromatic moieties, such as not more than 25 wt.-%, preferably not more than 15 wt.-%, based on the total weight of the mineral oil.

According to a preferred embodiment, the composition further comprises at least one particulate filler **F,** preferably selected from the group consisting of ground or precipitated calcium carbonate, lime, calcium-magnesium carbonate, talcum, gypsum, barite, pyrogenic or precipitated silica, silicates, mica, wollastonite, kaolin, feldspar, chlorite, bentonite, montmorillonite, dolomite, quartz, cristobalite, calcium oxide, aluminum hydroxide, magnesium oxide, hollow ceramic spheres, hollow glass spheres, hollow organic spheres, glass spheres, kaolin and functionalized alumoxanes. Preferred solid particulate fillers include both organically coated and also uncoated commercially available forms of the fillers included in the above presented list.

The at least one solid particulate filler **F** is preferably in the form of finely divided particles. The term "finely divided particles" refers to particles, whose median particle size dso does not exceed 500 µm, in particular, 250 µm. The particle size distribution for particulate fillers can in particular be determined by sieve analysis according to the method as described in ASTM C136/C136M - 14 standard ("Standard Test Method for Sieve Analysis of Fine and Coarse Aggregates).

According to one or more embodiments, the at least one particulate filler **F** comprises at least one filler selected from the list consisting of ground or precipitated calcium carbonate, calcium oxide, lime, calcium-magnesium carbonate, talcum, gypsum, graphite, barite, silica, silicates, mica, wollastonite, kaolin, and mixtures thereof, more preferably selected from the list consisting of ground or precipitated calcium carbonate, calcium oxide, silica, kaolin, and mixtures thereof. Calcium oxide hast the additional benefit of acting as an efficient drying agent within the composition, which increases storage stability and inhibits undesired side reactions.

According to one or more embodiments, the at least one particulate filler **F** comprises 10 - 50 wt.-%, preferably 15 - 45 wt.-%, more preferably 20 - 40 wt.-%, even more preferably 25 - 35 wt.-% of the total weight of the composition.

The composition can further comprise at least one blowing agent.

A suitable blowing agent may be a chemical or physical blowing agent. Chemical blowing agents are organic or inorganic compounds that decompose under influence of, for example temperature or humidity, while at least one of the formed decomposition products is a gas. Physical blowing agents include, but are not limited to, compounds that become gaseous at a certain temperature. Preferably, the at least one blowing agent is a chemical blowing agent.

Suitable chemical blowing agents include, but are not limited to, azo compounds, hydrazides, nitroso compounds, carbamates, carbazides, bicarbonates, polycarboxylic acids, and salts of polycarboxylic acids.

Preferably, the composition has a viscosity at 23°C, measured a rheometer with a heated plate (MCR 201, Anton Paar), gap 1000 µm, measuring plate diameter: 25 mm (plate / plate; PP25-SN13401), shear rate 0.01/s - 650/s, of 1000 - 3000 Pa·s (at 0.1/s), 300 - 1000 Pa·s (at 1/s), 80 - 250 Pa·s (at 10/s), and 10 - 50 Pa·s (at 100/s).

Viscosities with higher ranges, especially in the lower shear rates (in particular 0.1/s) are less preferred since they are less suitable for industrial adhesive application processes.

In a preferred embodiment, the composition comprises:
- at least one acrylate polymer **AP** in an amount of 5 - 40 wt.-%, 10 - 40 wt.-%, 12.5 - 40 wt.-%, more preferably 15 - 35 wt.-%, even more preferably 17.5 - 32.5 wt.-%, most preferably 20 - 30 wt.-%, based on the total weight of the composition;
- at least one epoxy resin **A** having on average more than one epoxide group per molecule, preferably having an epoxy equivalent weight of more than 400 and/or an average epoxy functionality of between 1.5 and 2.5, in an amount of 1 - 25 wt.-%, preferably 2 - 20 wt.-%, in particular 3 - 15 wt.-%, more preferably 5 - 12 wt.-%, based on the total weight of the composition;
- at least one latent hardener for epoxy resins, selected from the group consisting of dicyandiamide, guanamines, guanidines, aminoguanidines and derivatives thereof, substituted ureas, imidazoles and amine complexes, preferably dicyandiamide;
- at least one plasticizer **PL,** whereby wherein the at least one plasticizer **PL** preferably comprises or consists of an aliphatic polyester that is liquid at 23 °C, in an amount of 5 - 50 wt.-%, 10 - 40 wt.-%, preferably 12.5 - 40 wt.-%, more preferably 15 - 35 wt.-%, even more preferably 17.5 - 32.5 wt.-%, most preferably 20 - 30 wt.-%, based on the total weight of the composition:
- preferably at least one particulate filler **F,** preferably selected from the list consisting of ground or precipitated calcium carbonate, calcium oxide, silica, kaolin, and mixtures thereof, in an amount of 10 - 50 wt.-%, preferably 15 - 45 wt.-%, more preferably 20 - 40 wt.-%, even more preferably 25 - 35 wt.-% of the total weight of the composition;
- preferably at least one at least one additive selected from curing accelerators, tougheners, moisture scavengers, pigments, stabilizers, and thixotropy agents.

In said composition it is preferred if weight ratio of the total amount of the at least one epoxy resin **A** to the total amount of the latent hardener is 40:1 to 10:1, preferably 35:1 to 15:1, more preferably 30:1 to 20:1.

In said composition it is further preferred if the weight ratio between the total weight of the at least one plasticizers **PL** and the total weight of the acrylate polymer **AP** ranges from 1:10 to 20:10, preferably from 2:10 to 15:10, from 2:10 to 15:10, from 5:10 to 15:10; from 5:10 to 10:10, from 6:10 to 10:10, and most preferably from 8:10 to 10:10.

In said composition it is further preferred if the composition does not contain any other epoxy resins apart from said epoxy resin **A.**
Furthermore, it is preferred if the composition does not contain PVC.

It can be further advantageous if the preferred composition above consists of more than 80% by weight, preferably more than 90% by weight, in particular more than 95% by weight, particularly preferably more than 98% by weight, most preferably more than 99% by weight -%, of the aforementioned components, based on the total weight of the composition

The compositions according to the present invention can be produced by mixing the components in any suitable mixing apparatus, for example in a dispersion mixer, planetary mixer, double screw mixer, continuous mixer, extruder, or dual screw extruder.

The compositions according to the present invention obtained by using the process as described above are storage stable at normal storage conditions. The term "storage stable" refers here to materials, which can be stored at specified storage conditions for long periods of time, such as at least one month, in particular at least 3 months, without any significant changes in the application properties of the material. The "typical storage conditions" refer here to temperatures of not more than 40°C, in particular not more than 30°C.

Another subject of the present invention is a method for providing sealing to a structure of a manufactured article, preferably an automotive vehicle, that is later powder-coated, the method comprising steps of:
i) Forming a weld connecting a first member and a second member of the structure, both first and second members having outwardly and inwardly facing surfaces,
ii) Providing a composition according to the present invention onto the weld seam,
iii) Bringing the welded structure and the sealed weld seam obtained in step ii) into contact with a powder coating material and curing both the powder coating and the composition according to the invention, in particular by heating the structure to a temperature of 140-220°C, in particular 160-200°C, preferably from 180-190°C, in particular for 10-60 min, particularly preferably for 20-45 min.

Preferably the steps i) to iii) are performed in chronological order starting from step i).

The weld connecting the first and second members can be formed using any suitable welding techniques, such as electrical resistance welding or spot welding.

During step iii) the curing of the composition is obtained by the diffusion of the plasticizer **PL** into the dispersed acrylate polymer **AP,** thereby causing the composition to plasticize. When cooling, the composition gel into a dimensionally stable system. By a concomitant mechanism, the epoxy resin **A** cures with the latent hardener under heat conditions.

The first member of the structure can consist of the same or a different material as the second member.

The application in which at least one material is a metal is preferred. The use of the same or different metals, in particular in body-in-white construction in the automotive industry, is regarded as a particularly preferred use. The preferred metals are steel, in particular electrolytically galvanized, hot-dip galvanized, oiled steel, bonazinc-coated steel, and subsequently phosphated steel, and aluminum, in particular in the variants typically occurring in automobile construction.

It is therefore preferred that first member of the structure and / or the second member of the structure is a metal.

It is also advantageous if there is no curing, especially no complete curing, of the applied composition before step iii), in particular no curing by heating the composition to a temperature of 140-220°C, in particular for 10-60 min, particularly preferably for 20-45 min.

Such a method for providing sealing to a structure of a manufactured article results in an article, which represents a further aspect of the present invention. Such an article is preferably a vehicle or part of a vehicle, preferably an automotive vehicle.

Another subject of the present invention is the use of a composition according to any embodiment of the present invention as described above as plastisol seam sealer on substrates that are powder-coated after application of said seam sealer. This use is preferably done by employing the method described above.

In preferred embodiments of said use, said seam sealer is subjected to a temperature of 140-220°C in particular for 10-60 minutes during the powder-coating process.

### Examples

### Preparation of the compositions

The reference composition R1 and the compositions E1 - E3 according to the invention were produced from the raw materials listed in Table 1.

The composition details (numbers in weight-% based on the respective composition) are shown in Table 2. The respective compositions were prepared by mixing the listed ingredients in a standard mixer with dissolver blades and subsequently filled into airtight cartridges.

**Table 1: Used raw materials.**

| **Raw material** | **Trade name (supplier)** | **Description** |
|---|---|---|
| UC508 | Kan Ace^{®} UC 508 (Kaneka) | Acrylate polymer **AP** |
| Palamoll | Palamoll^{®} 652 (BASF) | Plasticzier **PL** |
| DER331 | D.E.R^{®} 331 (Olin) | Bisphenol A digylcidyl ether (bisphenol-based epoxy resin) |
| XY7400N | jER XY7400N (Mitsubishi) | Epoxy resin **A** |
| PPGDGE | Poly(propylene glycol) diglycidyl ether (Sigma Aldrich) | Epoxy resin **A** |
| DiCY | Dicyandiamide (Alzchem) | Latent hardener |
| Dyhard | DYHARD^{®} UR700 (Alzchem) | Curing accelerator |
| TOTM | Palatinol^{®} TOTM (BASF) | Plasticzier **PL** |
| Adeka | QR-1636-2E (Adeka) | Blocked urethane resin (toughener) |
| CaO | Calcium oxide | Filler **F**/ moisture scavenger |
| CaCO₃ | Calcium carbonate | Filler **F** |
| TiO₂ | Titanium dioxide | Pigment |
| Aerosil | AEROSIL^{®} R 202 (Evonik) | Thixotropy additive |

**Table 2: Compositions R1 and E1-E3. All numbers in wt.-%, based on the respective example composition.**

| **Example** | **R1** | **E1** | **E2** | **E3** |
|---|---|---|---|---|
| UC508 | 23.63 | 22.05 | 23.63 | 23.89 |
| Palamoll | 23.91 | 22.31 | 23.91 | 24.17 |
| DER331 | 5.56 | - | - | - |
| XY7400N | - | 11.12 | 5.56 | - |
| PPGDGE | - | - | - | 4.99 |
| DiCY | 0.22 | 0.44 | 0.22 | 0.2 |
| Dyhard | 0.02 | 0.04 | 0.02 | 0.02 |
| TOTM | 4.59 | 4.29 | 4.59 | 4.64 |
| Adeka | 4.9 | 4.58 | 4.9 | 4.96 |
| CaO | 3.07 | 2.86 | 3.07 | 3.1 |
| CaCO₃ | 27.58 | 25.74 | 27.58 | 27.89 |
| TiO₂ | 3.38 | 3.15 | 3.38 | 3.41 |
| Aerosil | 3.14 | 3.41 | 3.14 | 2.73 |
| *TOTAL* | *100* | *100* | *100* | *100* |

### Test methods

Examples R1 and E1-E3 were subjected to a **low temperature mandrel bending test** according to SAE J243 (1971), ADS-2-Low temperature tests, 4.2 Method B (Bend Test).

The substrate used for the bending test was aluminum foil of 0.05 mm of thickness.

The substrate was pre-treated/washed with following chemicals:
5 minutes in a 40°C solution of 3% dilution of concentrated Linc Clean^{®} 2706M (Lincoln Chemical Corp.), 5 minutes in a 40°C solution of 2% dilution of concentrated Linc Phos^{®} 4262SW (Lincoln Chemical Corp.), 5 minutes in a 40°C solution of 1% dilution of concentrated Linc Seal^{®} 3308 (Lincoln Chemical Corp).

The test sealant compositions were applied as beads onto an aluminum foil first with a thickness of approximately 2.5 millimeters.

Two samples were used for each experiment, one uncoated, another one coated with a polyester-TGIC based powder-coat.

Each sample was baked at 204°C (400°F) for 30 minutes, which is a very typical schedule to cure a powder-coat.

Thereafter, mandrel bending tests (diameter of the mandrel used for bending test was 1 inch (2.56 cm)) were conducted according to the SAE J243 standard test specified above at various temperatures (as detailed in Table 3), a pass ("passed") is achieved when the beads can be bended 180° without cracking and/or losing adhesion. Samples that cracked and/or lost adhesion to the substrate during the bending test failed ("failed"). This test allows assessment of the low temperature flexibility and bendability of a sample composition.

The data of **viscosity** were collected by an Anton Paar Rheometer equipped with a 25 mm diameter plate PP25-SN13401, a gap of 1 mm, measurement at 23 °C, shear rate of 0.01 - 650/s, duration of 49 minutes, sampling every second. Viscosity measurements were conducted both on samples stored at 23 °C during 7 days before measurement at 23 °C, and samples of the same material stored at 40°C during 7 days before measurement at 23 °C. The latter constitutes an artificially aged sample, which allows assessment of the storage stability of each composition when compared to the fresh sample.

The results of these measurements are listed in Table 3.

**Table 2: Test results of compositions R1 and E1-E3. ¹ The conditions refer to the respective measurement method specified further above. "n/m" means that these data has not been measured.**

| Test | Conditions ¹ | **Example composition** | | | |
|---|---|---|---|---|---|
| | | **R1** | **E1** | **E2** | **E3** |
| Mandrel bending test uncoated beads | -40°C | failed | passed | failed | failed |
| | -35°C | failed | passed | passed | passed |
| | -30°C | failed | passed | passed | passed |
| | -25°C | failed | passed | passed | passed |
| | -20°C | failed | passed | passed | passed |
| | -15°C | passed | passed | passed | passed |
| Mandrel bending test powder coated beads | -30°C | failed | passed | failed | failed |
| | -25°C | failed | passed | passed | passed |
| | -20°C | failed | passed | passed | passed |
| | -15°C | failed | passed | passed | passed |
| | -10°C | passed | passed | passed | passed |
| Viscosity (23°C) after 7d at 23°C | 0.1 s⁻¹ | 1351 | 2539 | 1557 | 1001 |
| | 1 s⁻¹ | 359 | 625 | 433 | 313 |
| | 10 s⁻¹ | 115 | 129 | 92 | 84 |
| | 100 s⁻¹ | 40 | 22 | 18 | 18 |
| Viscosity (23°C) after 7d at 40°C | 0.1 s⁻¹ | 2396 | 4166 | 2643 | n/m |
| | 1 s⁻¹ | 890 | 1377 | 693 | n/m |
| | 10 s⁻¹ | 214 | 228 | 137 | n/m |
| | 100 s⁻¹ | 71 | 39 | 26 | n/m |

## Claims

1. An acrylic plastisol composition comprising:
e) at least one acrylate polymer **AP**;
f) at least one epoxy resin **A** having on average more than one epoxide group per molecule;
g) at least one latent hardener for epoxy resins;
h) at least one plasticizer **PL**;
**characterized in that**
said epoxy resin **A** is liquid at 23 °C and has a polyether backbone that is not based on bisphenol structural units.

2. The composition according to claim 1, wherein said epoxy resin **A** has an epoxy equivalent weight of more than 400 and/or an average epoxy functionality of between 1.5 and 2.5.

3. The composition according to any one of previous claims, wherein the amount of epoxy resin **A** is 1 - 25 wt.-%, preferably 2 - 20 wt.-%, in particular 3 - 15 wt.-%, more preferably 5 - 12 wt.-%, based on the total weight of the composition.

4. The composition according to any one of previous claims, wherein the amount of at least one acrylate polymer **AP** is 5 - 40 wt.-%, 10 - 40 wt.-%, 12.5 - 40 wt.-%, more preferably 15 - 35 wt.-%, even more preferably 17.5 - 32.5 wt.-%, most preferably 20 - 30 wt.-%, based on the total weight of the composition.

5. The composition according to any one of previous claims, wherein the at least one acrylate polymer **AP** is selected from the list consisting of polymers of methyl acrylate, ethyl acrylate methyl methacrylate, propyl acrylate, methyl methacrylate, ethyl methacrylate, propyl methacrylate, butyl methacrylate, and any copolymers thereof.

6. The composition according to any one of previous claims, wherein said epoxy resin **A** exhibits a viscosity, measured at 25 °C according to ASTM D445-21, of less than 5 Pa·s, preferably less than 2.5 Pa·s more preferably less than 1 Pa·s, most preferably less than 0.5 Pa·s.

7. The composition according to any one of previous claims, wherein the latent hardener is selected from the group consisting of dicyandiamide, guanamines, guanidines, aminoguanidines and derivatives thereof, substituted ureas, imidazoles and amine complexes, preferably dicyandiamide.

8. The composition according to any one of previous claims, wherein the weight ratio of the total amount of the at least one epoxy resin **A** to the total amount of the latent hardener is 40:1 to 10:1, preferably 35:1 to 15:1, more preferably 30:1 to 20:1.

9. The composition according to any one of previous claims, wherein the at least one plasticizer **PL** comprises an aliphatic polyester that is liquid at 23 °C.

10. The composition according to any one of previous claims, wherein the composition comprises 5 - 50 wt.-%, 10 - 40 wt.-%, preferably 12.5 - 40 wt.-%, more preferably 15 - 35 wt.-%, most preferably 20 - 30 wt.-%, based on the total weight of the composition, of the at least one plasticizer **PL.**

11. The composition according to any one of previous claims, wherein the composition comprises 0.1 - 1.5 wt.-%, preferably 0.15 - 1.0 wt.-%, most preferably 0.2 - 0.5 wt.-%, based on the total weight of the composition, of the at least one latent hardener, in particular dicyandiamide.

12. The composition according to any one of previous claims, wherein the composition furthermore contains at least one additive selected from curing accelerators, tougheners, moisture scavengers, fillers, pigments, stabilizers, and thixotropy agents.

13. The composition according to any one of previous claims, wherein the composition does not contain any other epoxy resins apart from said epoxy resin **A** and the composition does not contain PVC.

14. Use of a composition according any of claims 1 to 13 as plastisol seam sealer on substrates that are powder-coated after application of said seam-sealer.

15. Use according to claim 14, wherein said seam sealer is subjected to a temperature of 140-220°C in particular for 10-60 minutes during the powder-coating process.
